# EUROPEAN PATENT APPLICATION

(11) **EP 2 429 210 A2**
(43) Date of publication of application: **14.03.2012**
(21) Application number: 11181209.5
(22) Date of filing: 14.09.2011
(51) Int. Cl.: H04N 21/431, H04N 21/4425, H04N 21/4335, H04N 21/433, H04N 5/76

(54) **Image processing apparatus and method of providing user interface thereof**

(30) Priority: 14.09.2010 KR 20100089982
(71) Applicant: Samsung Electronics Co., Ltd., Suwon-si, Gyeonggi-do 442-742 (KR)
(72) Inventor: SON, Ho-shin, Gyeonggi-do (KR); LIM, Jin-tack, Seoul (KR)
(74) Representative: Moy, David

(57) **Abstract**

An image processing apparatus includes a reception unit receiving broadcasting data, a signal processing unit which processes the received broadcasting data, a storage unit which stores the processed broadcasting data when a recording function starts, an output unit which provides a user interface, and a control unit which controls the output unit to provide the user interface that includes information on a available space of the storage unit and a record proceeding space against the available space when the recording function starts. Accordingly, convenience of a user who uses the recording function can be sought.

## Description

### PRIORITY

This application claims priority under 35 U.S.C. §119(a) to Korean Patent Application No. 10-2010-0089982, filed on September 14, 2010, in the Korean Intellectual Property Office, the disclosure of which is incorporated herein in its entirety by reference.

### BACKGROUND

### 1. Field

Exemplary embodiments relates generally to an image processing apparatus and a method of providing a User Interface (Ul) thereof, and more particularly to an image processing apparatus that can perform recording and a method of providing a Ul thereof.

### 2. Description of the Related Art

Recently, with the development of digital broadcasting technology, a Personal Video Recorder (PVR) that can record and reproduce a digital broadcast has appeared.

The PVR, unlike a Video Cassette Recorder (VCR) that stores an image signal on a magnetic tape, is a new conceptual digital recorder that records and reproduces information on a hard disk. This personal video recorder can record a predetermined amount of a broadcasting program in accordance with its capacity through a hard disk drive built in a set top box or a TV receiver even without a VCR.

Accordingly, a program viewing schedule can be made according to viewers' personal selection and tastes, and thus the viewers can exercise a greater control in comparison to that in a television (TV). That is, the viewers can view desired programs whenever they desire to view the programs regardless of a program schedule prepared in advance by broadcasting stations.

On the other hand, in operating the PVR, it is common to start recording by one pressing of a button for user's convenience.

In this case, a recording end point in time may differ according to the basic setting of the PVR, and unless such a recording end point in time is specified in a Ul, a user cannot clearly recognize the recording end point in time.

Also, in a general Ul, in order for a user to directly designate a recording program or a recording time after the start of recording, it is required to set the recording program or the recording time through another Ul which causes the user inconvenience.

Also, even in the case of applying a time shift function, there is a problem that the Ul does not clearly display a reproduction position of a time shift buffer region does not exist.

### SUMMARY

Exemplary embodiments have been made to address at least the above problems and/or disadvantages and to provide at least the advantages described below. Accordingly, exemplary embodiments provide an image processing apparatus and a method of providing a Ul thereof, which can intuitively display a recording state and a reproduction state.

An aspect of an exemplary embodiment provides an image processing apparatus including a reception unit receiving broadcasting data; a signal processing unit processing the received broadcasting data; a storage unit storing the processed broadcasting data when a recording function starts; an output unit providing a user interface; and a control unit controlling the output unit to provide the user interface that includes information on a available space of the storage unit and a record proceeding space against the available space when the recording function starts.

The storage unit may include a circular buffer area that provides a time shift function, and the control unit may control the output unit to provide the user interface for the time shift function in an analog watch shape.

The user interface for the time shift function may display at least one of time information on a time shiftable area, a storage level of the circular buffer area, and a current reproduction position on the circular buffer area.

The user interface for the time shift function may display the time shiftable area in a fan-shaped diagram having two radiuses and one arc on the analog watch shape, wherein one of the two radiuses represents time when the time shift function starts, and the other of the two radiuses represents time when the time shift function is possible based on the time when the time shift function starts.

The user interface for the time shift function may display the storage level of the circular buffer area as a sub fan-shaped area that corresponds to the current storage level against the whole fan-shaped area, wherein the corresponding sub fan-shaped area has a predetermined color so that the sub fan-shaped area is distinguished from a remaining storable area.

The user interface for the time shift function may display the current reproduction position on the circular buffer area in an hour hand or minute hand shape on the fan-shaped diagram.

The control unit may control the output unit to provide the user interface that displays the space in a time unit and displays at least one of broadcasting program information of which the recording is currently performed, a available time that remains in the storage unit, a recording completion time, a current record-setting time, and a remaining available time except for the current record-setting time.

The user interface may display the time information in a bar shape, display the bar so that the color of the bar is distinguished from the existing color in the case where the current record-setting time exceeds the available time, and display a minus (-) sign as long as the time that exceeds the available time.

The user interface may display the time information in a bar shape, and provide an inquiry window for resetting or maintaining the currently set recording operation in the case where the currently set recording time exceeds the available time.

The user interface may display the time information in a bar shape, and display a recording completion time area so that the recording completion time area is distinguished from the current record proceeding time area if a new recording command is input during proceedings of a preset recording operation.

The user interface may display the space of the storage unit in at least one of time unit and capacity unit.

An aspect of another exemplary embodiment provides a method of providing a Ul of an image processing apparatus including receiving broadcasting data; processing the received broadcasting data; storing the processed broadcasting data in a storage unit when a recording function starts; and providing the user interface that includes information on a available space of the storage unit and a record proceeding space against the available space when the recording function starts.

The storage unit may include a circular buffer area that provides a time shift function, and the step of providing the user interface may provide the user interface for the time shift function in an analog watch shape.

The user interface for the time shift function may display at least one of time information on a time shiftable area, a storage level of the circular buffer area, and a current reproduction position on the circular buffer area.

The user interface for the time shift function may display the time shiftable area in a fan-shaped diagram having two radiuses and one arc on the analog watch shape, wherein one of the two radiuses represents time when the time shift function starts, and the other of the two radiuses represents time when the time shift function is possible based on the time when the time shift function starts.

The user interface for the time shift function may display the storage level of the circular buffer area as a sub fan-shaped area that corresponds to the current storage level against the whole fan-shaped area, wherein the corresponding sub fan-shaped area has a predetermined color so that the sub fan-shaped area is distinguished from a remaining storable area.

The user interface for the time shift function may display the current reproduction position on the circular buffer area in an hour hand or minute hand shape on the fan-shaped diagram.

The step of providing the user interface may provide the user interface that displays the space in a time unit and displays at least one of broadcasting program information of which the recording is currently performed, a available time that remains in the storage unit, a recording completion time, a current record-setting time, and a remaining available time except for the current record-setting time.

The user interface may display the time information in a bar shape, display the bar so that the color of the bar is distinguished from the existing color in the case where the current record-setting time exceeds the available time, and display a minus (-) sign as long as the time that exceeds the available time.

The user interface may display the time information in a bar shape, and display a recording completion time area so that the recording completion time area is distinguished from the current record proceeding time area if a new recording command is input during proceedings of a preset recording operation.

An aspect of another exemplary embodiment provides an image processing apparatus including a signal processing unit which processes a received broadcasting data comprising a currently broadcast program; a storage unit which stores the currently broadcast program; an output unit which displays a user interface and displays the currently broadcast program, a control unit which begins storing the currently broadcast program in the storage unit at a start recording time, wherein the user interface comprises an analog clock including a buffer area which represents a first period of time of the currently broadcast program which the storage unit is able to store based on the start recording time, and a divider which divides the buffer area into a first area which represents a second period of time of the currently broadcast program which has been stored since the start recording time, and a second area which represents a third period of time of an available storage space in the storage unit, wherein a location of the divider moves as the currently broadcast program is recorded.

Accordingly, a user can intuitively recognize a recording state and a reproduction state when he/she uses a recording function.

### BRIEF DESCRIPTION OF THE DRAWINGS

The above and other aspects, features and advantages will be more apparent from the following detailed description when taken in conjunction with the accompanying drawings, in which:

FIG. 1 is a block diagram illustrating the configuration of an image processing apparatus according to an exemplary embodiment;

FIGS. 2A to 2D are diagrams illustrating Ul providing screens according to an exemplary embodiment;

FIGS. 3A to 3E are diagrams illustrating Ul providing forms according to an exemplary embodiment;

FIGS. 4A to 4C are diagrams illustrating Ul providing forms according to another exemplary embodiment;

FIG. 5 is a diagram illustrating a Ul providing screen according to another exemplary embodiment; and

FIG. 6 is a flowchart illustrating a method of providing a Ul according to an exemplary embodiment.

### DETAILED DESCRIPTION OF EXEMPLARY EMBODIMENTS

Hereinafter, exemplary embodiments are described in detail with reference to the accompanying drawings.

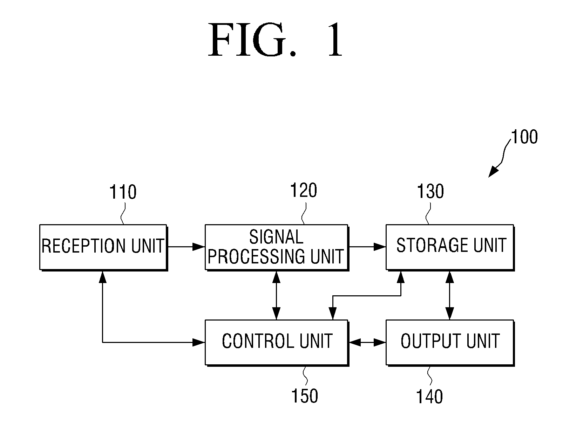

FIG. 1 is a block diagram illustrating the configuration of an image processing apparatus according to an exemplary embodiment.

A reception unit 110 receives a broadcasting program from the outside.

The reception unit 110 may be implemented in the form of selecting any one of broadcasting signals received by wire or wirelessly through a tuner (not illustrated). Also, the reception unit 110 may be implemented to receive a broadcasting signal from an external device (for example, external set-top box) connected through an external input unit (not illustrated).

A signal processing unit 120 receives the broadcasting signal received through the reception unit 110, and performs a signal process, such as decoding, scaling, and the like, with respect to the received broadcasting signal. Also, the signal processing unit 120 may extract additional information included in the received broadcasting signal, and transfer the extracted additional information to a control unit 160 to be described later. This additional information includes information such as an Electronic Program Guide (EPG) and the like.

A storage unit 130 has a predetermined storage capacity, and can store received broadcasting data when a recording function starts. Here, the recording function may start according to a user command or a preset option.

Specifically, the storage unit 130 records the broadcast output from the signal processing unit 120 on a recording medium. As a recording medium, a magnetic recording medium such as a Hard Disk Drive (HDD) and a semiconductor recording medium such as a memory card and a flash memory may be applicable, and an optical recording medium such as a Digital Versatile Disk (DVD) may be also applicable.

The broadcast may be recorded or temporarily recorded in the recording medium. The term "recording" refers to recording of a broadcasting program, based on a command by a user. The term "temporary recording" refers to temporary recording of a predetermined quantity of the broadcasting program for time shift reproduction. That is, the temporary recording corresponds to the recording that is performed so that a user can change the current viewing time, for example, to delay the start time of the program. To perform such time shift reproduction, the broadcast program is recorded during the time when the broadcast program start time is delayed.

Also, the storage unit 130 can reproduce the broadcast that is recorded or temporarily recorded on the recording medium.

An output unit 140 outputs the broadcast output from the signal processing unit 120 to an internal display or an external display. Specifically, the output of the broadcast to the internal display may be performed by a display driving unit (not illustrated) in the process of displaying the broadcast on a display unit (not illustrated). In addition, the output of the broadcast to the external display may be performed by an external output unit (not illustrated) in the process of transferring the broadcast to the external display (for example, an external TV).

In particular, the output unit 140 can provide a Ul that indicates at least one of a reproduction state and a recording state of broadcasting data stored in the storage unit 130. Here, the Ul may be provided in an On Screen Display (OSD) form.

Accordingly, the image processing apparatus 100 according to an exemplary embodiment may further include an OSD processing unit (not illustrated). The OSD processing unit can provide a Ul that indicates at least one of the reproduction state and the recording state of the broadcasting data stored in the storage unit 130 in an OSD form on a displayed image.

Also, the OSD processing unit can perform tasks associated with two-dimensional (2D) and three-dimensional (3D) display of an OSD screen, transparency, color, size, shape and position control, highlight, animation effect, and the like.

The control unit 150 can control other operations of the image processing apparatus, for example, the operation of the above-described function units.

In particular, the control unit 150 can control the recording function and the reproduction function of the received broadcasting data.

Also, if the recording function starts, the control unit 150 can control the output unit 140 to provide a Ul that includes information on an available space of the storage unit 130 and a record proceeding space against the available space, i.e., the space available as the broadcast program is recorded. In this case, the Ul may be displayed on one area of a display screen.

On the other hand, according to an exemplary embodiment, the storage unit 130 may include a circular buffer area that provides a time shift function, and the control unit may control the respective function units to provide the time shift function.

The time shift function is a function that enables a user to view a previous broadcast which starts prior to the current broadcasting time by storing and reproducing the previous broadcast . That is, a start time of the previous broadcast may be delayed.

Such a time shift function can be provided by temporarily recording a predetermined quantity (in units of time) of the broadcast and securing the predetermined quantity (in units of time) of the previous broadcast.

For example, using the time shift function, the currently broadcasting signal is automatically stored in a hard disk as a digital signal and is reproduced on the screen at the same time. Accordingly, if a "stop" button is pressed and then a "play" button is pressed again, the stored broadcasting signal is reproduced from the point in time where the broadcasting signal is stopped. Also, the time shift function enables a user to review the current broadcasting program, to reproduce the broadcasting program in slow motion, to skip a boring portion, and to search and view a desired portion of the broadcasting program.

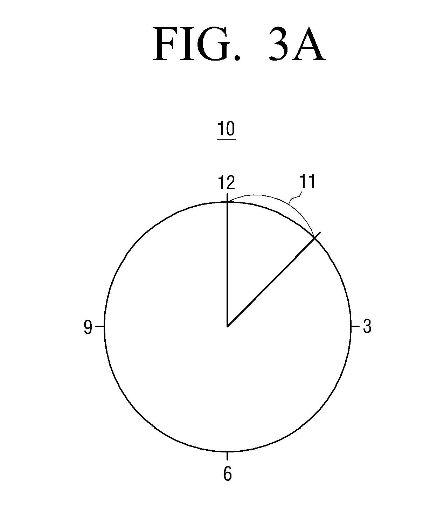

The control unit 150 can control the output unit 240 to provide the Ul for the time shift function in an analog watch, or clock, shape, as shown for example in FIGS. 3A to 3E.

Here, the Ul for the time shift function may display at least one of time information on a time shiftable area, a storage level of the circular buffer area, and a current reproduction position on the circular buffer area.

Also, the Ul for the time shift function may display the time shiftable area in a fan-shaped diagram having two radiuses and one arc on the analog watch shape. In this case, one of the two radiuses represents a time when the time shift function starts, and the other of the two radiuses represents a farthest possible time when the time shift function must end based on the time when the time shift function starts, and the available space allotted for the time shift function.

Also, the Ul for the time shift function may display the storage level of the circular buffer area as a sub fan-shaped area that corresponds to the current storage level against the whole fan-shaped area, and the corresponding sub fan-shaped area may have a predetermined color so that the sub fan-shaped area is distinguished from the remaining storable area.

Also, the Ul for the time shift function may display the current reproduction position on the circular buffer area in an hour hand or minute hand shape on the fan-shaped diagram.

Also, the control unit 150 may control the output unit to display the available space of the storage unit 130 and a record proceeding space against the available space in at least one of a time unit and a capacity unit.

Specifically, the control unit 150 may control the output unit to provide the Ul that displays at least one of broadcasting program information of the broadcast program which is currently being recorded, an available time that remains in the storage unit, a recording completion time, a current record-setting time, and a remaining available time except for the current record-setting time.

Here, the Ul may display diverse kinds of time information in a bar shape.

Specifically, the Ul may display the available time that remains in the storage unit, the recording completion time, the current record-setting time, and the remaining available time except for the current record-setting time with different colors.

For example, the Ul may display the bar so that the color of the bar is distinguished from the existing color in the case where the current record-setting time exceeds the available time. Also, the Ul may display a minus (-) sign as long as the time that exceeds the available time.

Also, the Ul may provide an inquiry window for resetting or maintaining the currently set recording operation in the case where the currently set recording time exceeds the available time.

Also, the Ul may display a recording completion time area so that the recording completion time area is distinguished from the current record proceeding time area if a new recording command is input during proceedings of a preset recording operation.

On the other hand, the image processing apparatus 100 may further include a switching unit (not illustrated). The switching unit may perform a switching operation so that a broadcast output from the signal processing unit 120 or a broadcast reproduced from the storage unit 130 is selectively output to the output unit 140. The switching operation of the switching unit 140 is controlled by the control unit 160.

For example, in the case where the current viewing point in time is the current broadcasting point in time (that is, in the case where a user views the currently received broadcast), the switching unit performs a switching operation so that the broadcast output from the signal processing unit 120 is output to the output unit 140. By contrast, in the case where the current viewing point in time is a previous broadcasting point in time (that is in the case where a user views the previously received broadcast), the switching unit performs a switching operation so that the temporarily stored broadcast that is now reproduced from the storage unit 130 is output to the output unit 140.

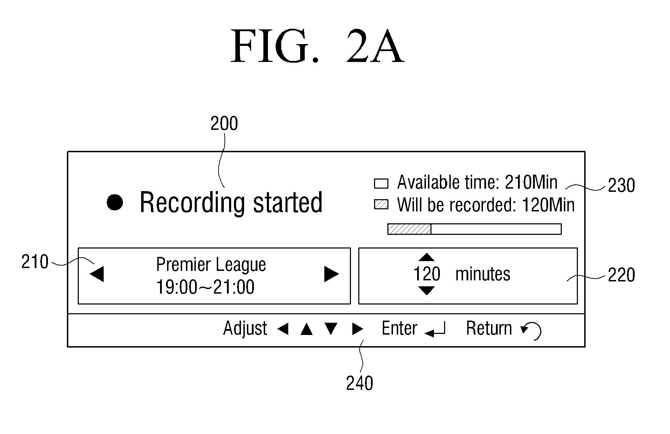

FIGS. 2A to 2D are diagrams illustrating UI providing screens according to an exemplary embodiment.

In the case where a user performs a recording function during viewing of the broadcasting program, a Ul as illustrated in FIG. 2A may be provided. Here, the Ul may be provided in an OSD form.

Referring to FIG. 2A, the Ul window may include an area 200 that indicates a record proceeding state, an area 210 that indicates broadcasting program information, an area 220 that indicates a length of time of a broadcasting program, an area 230 that indicates recording information, and a key area 240.

Area 200

The area 200 that indicates the record proceeding state may indicate recording started or recording, for example.

Area 210

The area 210 that indicates broadcasting program information may include current selectable broadcasting program information, for example, a title of a broadcasting program, a broadcasting start time and end time, and the like. For example, if the recording function is performed, the focus may be initially positioned on the area 210 that indicates the broadcasting program information.

Area 220

The area 220 that indicates the broadcasting program length of time may indicate the amount of time until the broadcasting program that is displayed on the area 210 that indicates the broadcasting program information has ended. For example, the area 220 may include the total amount of broadcasting time (for example, 120 minutes) of the current record-proceeding broadcasting program. Area 230

The area 230 that indicates the recording information may indicate the currently set recording time ("Will be recorded") and an available time except for the currently set recording time. The currently set recording time is the amount of time that is set to be recorded for the broadcast program indicated in area 210. The available time except for the currently set recording time is the amount of space, in a unit time, available for recording after the broadcast program indicated in area 210, i.e., the broadcast program being currently recorded, has been completely recorded. In this case, the currently set recording time and the available time except for the currently set recording time can be provided in a bar shape.

The currently set recording time and the available time except for the currently set recording time can be provided using the remaining space of the storage unit and the currently broadcasting program information.

Also, the currently set recording time and the available time except for the currently set recording time can be provided with different colors. For example, the currently set recording time may be displayed as a green bar, and the available time except for the currently set recording time may be displayed as a white bar.

Referring to the area 230 that indicates the recording information in FIG. 2A, it can be confirmed that the currently set recording time is 120 minutes, and the available time except for the currently set recording time is 210 minutes. Thus, in this exemplary embodiment, the total available time prior to the recording of the broadcast program indicated in area 210, i.e., the broadcast program being recorded, was 330 minutes.

Key area 240

The key area 240 can display diverse key functions. For example, the key area 240 may include an adjustment key for selecting/adjusting respective areas illustrated in FIG. 2A, an enter key for storing the current setting and closing a banner, and a return key for returning to the previous setting or returning to the setting before the banner starts and closing the banner.

Here, the adjustment key may be implemented to make a key input any time regardless of the focus. Also, the adjustment key (including up, down, left, and right keys) is implemented so that if a left/right key is input, a program box, for example area 210, is focused, and if an up/down key is input, a time box, for example area 220, is focused. Also, by adjusting the left/right key, a program to be recorded can be selected. For example, recording can be performed from the current program to the selected program. Also, by adjusting the up/down key, the time can be selected.

On the other hand, information displayed on the program box, e.g., area 210, and the time box, e.g., area 220, can be implemented to influence each other. For example, the information can be implemented so that if a program is changed, the time is also changed.

On the other hand, if the recording function is immediately performed, it may be set by default to perform recording up to the current program.

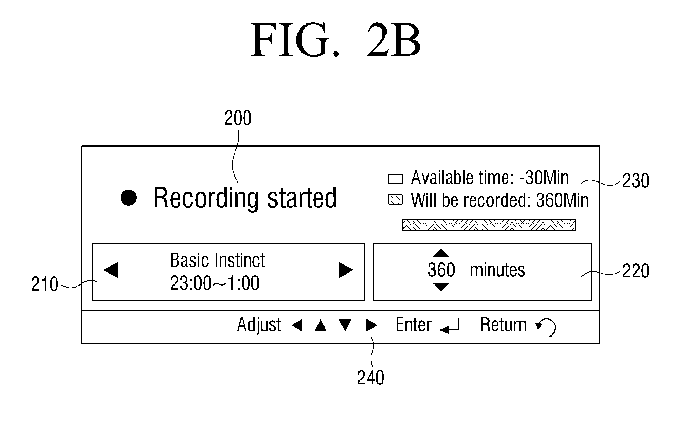

FIG. 2B is a diagram illustrating a banner shape in the case where the amount of space in unit time required to record the current program exceeds the available time, i.e., when there is not enough available space, in a unit of time, to record the entire broadcast program set to be recorded.

As illustrated in FIG. 2B, in the case where the current record-setting time (360 minutes) exceeds the available time (330 minutes), the current record-setting time may be displayed with a color that is distinguishable from the color of the current record-setting time when the current record-setting time does not exceed the available time. For example, in a general case, the current record-setting time ("Will be recorded") is displayed as a green bar (shown with slanted lines in FIG. 2A), and in the case where the current record-setting time exceeds the available time, the current record-setting time is displayed as a red bar (shown with cross-hatching in FIG. 2B). That is, the color changes once the current record-setting time exceeds the available time.

Also, the available time may be displayed with a minus sign (-) preceding the exceeding time (30 minutes in FIG. 2B).

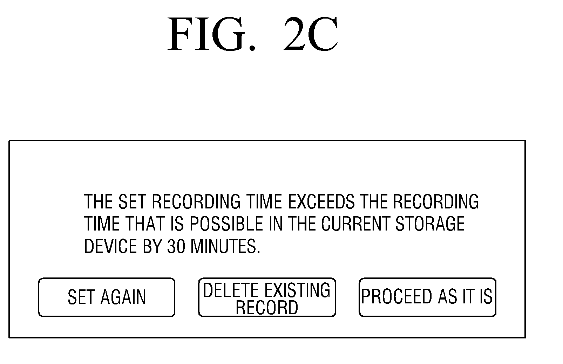

FIG. 2C is a diagram illustrating an inquiry window that is provided when the current record-setting exceeds the available time.

According to FIG. 2C, if the current record-setting time exceeds the available time, a menu for a guide announcement for guiding this and for setting the following recording direction may be provided.

For example, by providing a menu such as "Set again," "Delete existing record," "Proceed as it is", and the like, a user can reset the recording direction thereafter.

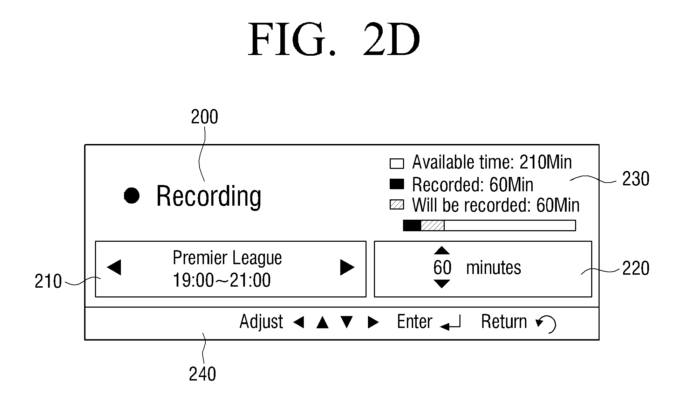

FIG. 2D is a diagram illustrating a banner shape in the case where a new recording command is input during recording.

A user can reset a recording program and the time for performing a new recording during the recording operation.

Referring to FIG. 2D, in the area 200 that indicates the record proceeding state, "Recording" may be displayed. Also, the available time, the recorded time, and the currently set recording time ("Will be recorded") may be displayed with different colors so that they can be distinguished from one another.

For example, the available time may be displayed with a white color, the currently recorded time may be displayed with a dark green color, and the currently set recording time ("Will be recorded") may be displayed with a green color.

On the other hand, in the above-described exemplary embodiment, the color of the bar, time, broadcasting program, and the like, are merely exemplary for convenience in explanation, and it is apparent to those of ordinary skilled in the art that diverse modifications thereof can be made.

FIGS. 3A to 3E are diagrams illustrating Ul providing forms according to an embodiment of the invention.

Referring to FIG. 3A, a Ul 10 for the time shift function may be provided in an analog watch form. Here, the time shift function can be provided through a circular buffer. The circular buffer is a buffer that circularly records data. If there is no space to record data in the buffer, the data recording position returns to the front portion of the buffer, and data is recorded again in the first portion of the buffer, i.e., new data is recorded in the front portion of the buffer over any data that was previously recorded in the front portion of the buffer.

In FIG. 3A, the area indicated in a fan-shaped form may be a time shiftable area 11, that is, a storage space of the time shift buffer.

As illustrated in FIG. 3A, the time shiftable area 11 may be displayed in a fan-shaped form having two radiuses and one arc on the analog watch shape. One of the two radiuses represents a point in time when the time shift function starts, and the other of the two radiuses represents a point in time when the time shift function can possibly extend to based on the time when the time shift function starts and the allotted space in the buffer. As illustrated, the time shiftable area may be 90 minutes.

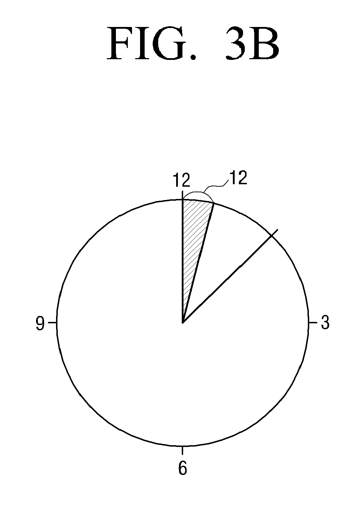

Referring to FIG. 3B, the storage level 12 of the circular buffer area may be provided in a fan-shaped form. The storage level 12 indicates what portion of the shiftable area 11 includes an already recorded, i.e. stored, program. As illustrated, it can be confirmed that the quantity of data for about 30 minutes is stored in the time shift buffer.

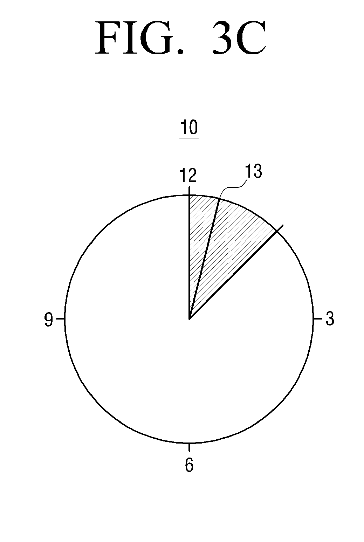

Referring to FIG. 3C, the time shift buffer is in a full state, and currently reproduced data among the data stored in the time shift buffer may be displayed in a line 13, for example, in an hour hand or minute hand shape. That is, the line 13 represents at what point in time within the recorded broadcast program or programs within the shiftable area is currently being displayed. As illustrated, it can be confirmed that data at the point in time of 12:30 is being reproduced.

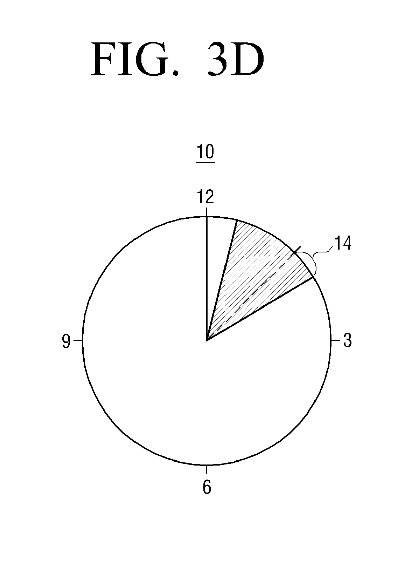

Referring to FIG. 3D, if data stored in the front portion of the buffer is deleted in a state where the time shift buffer is in a full state as illustrated in FIG. 3C, the data area 14 that is newly filled in the front portion of the buffer may be displayed as an external area that follows the time shiftable area 11 as illustrated in FIG. 3A. That is, if during recording of a broadcast program, the amount of space in the buffer is completely used prior to an end of the recording of the broadcast program, the front portion of the buffer, which has stored a beginning of the broadcast program, will be deleted as the end of the broadcast program is recorded in new area 14.

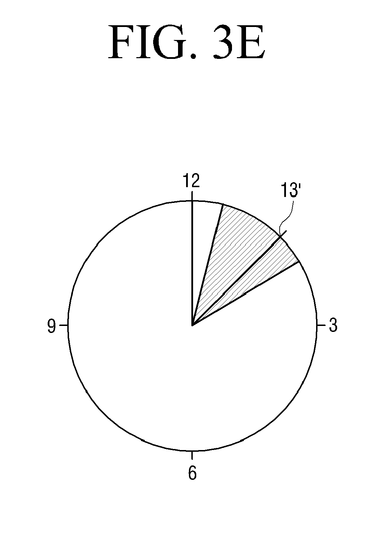

Referring to FIG. 3E, it can be confirmed that the currently reproduced point in time 13' has been shifted in a state where the time shift buffer is full. As illustrated, it can be confirmed that data at a point in time of 1:30 is reproduced. That is, even in the case where the data stored in the front portion of the buffer is deleted and new data is filled therein in a state where the time shift buffer is full, the user can accurately confirm the stored reproduction point in time. Also, according to circumstances, the current time may be displayed in an hour hand or minute hand shape on the analog watch. In this case, the hour hand or minute hand that indicates the current time may be displayed in distinction from the hour hand or minute hand that indicates the reproduction point in time as described above.

On the other hand, although a circular analog watch shape is exemplified in FIGS. 3A to 3E, the banner shape is not limited thereto.

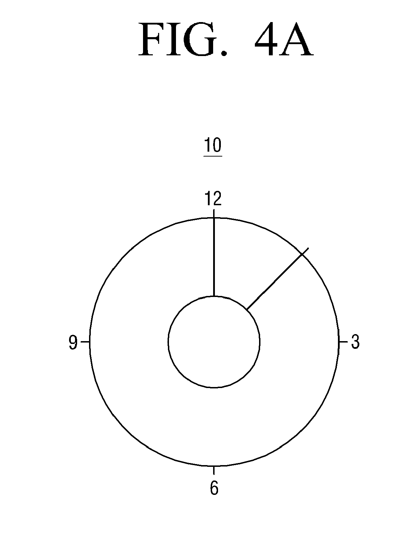

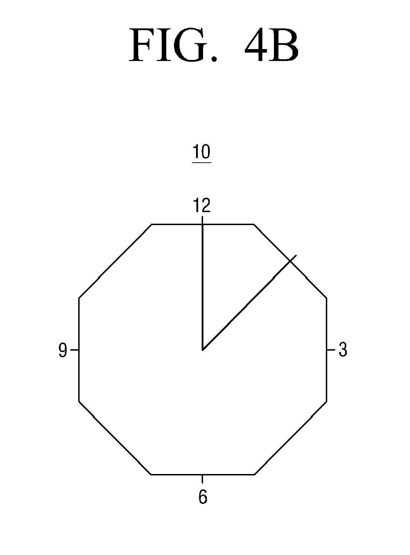

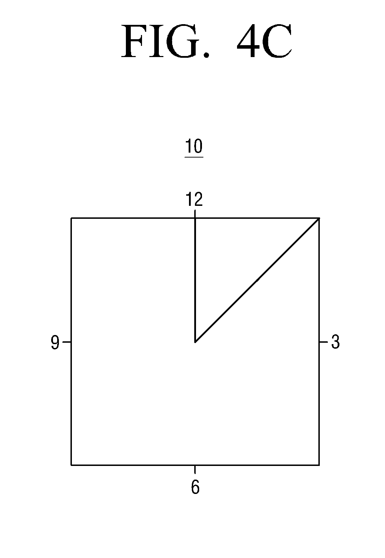

For example, as illustrated in FIGS. 4A to 4C, the banner may be implemented in diverse analog watch forms, such as a donut shape, a polygonal shape, a tetragonal shape, and the like.

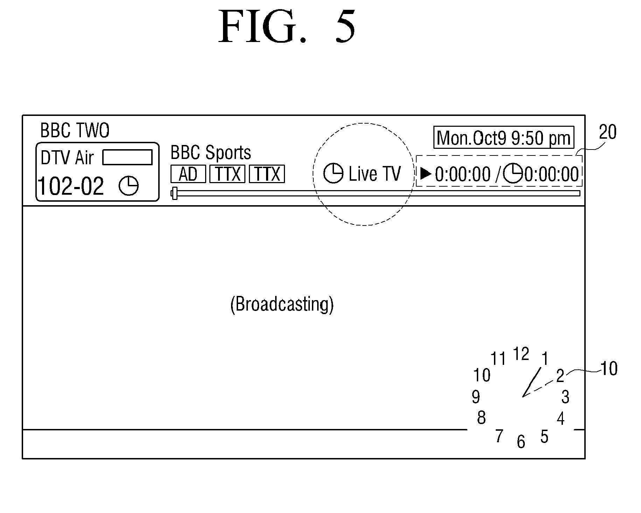

FIG. 5 is a diagram illustrating a Ul providing screen according to another exemplary embodiment.

Referring to FIG. 5, an example in which an analog watch-shaped time shift banner according to an exemplary embodiment is combined with a bar-shaped time shift banner is illustrated. If the time shift function is activated, the bar-shaped time shift banner and the analog watch-shaped time shift banner may be simultaneously displayed on one area of a screen where an image is reproduced.

As illustrated, if the time shift buffer is full in a bar-shaped time shift banner, the area 20 that indicates time may be in a fixed state. However, the analog watch-shaped time shift banner according to an exemplary embodiment can display time information on a time shiftable area, a storage level of the circular buffer area, and a current reproduction position on the circular buffer area even in the case where the time shift buffer is full, and thus a more intuitive UI can be provided to the user.

Although in this exemplary embodiment, an example in which the analog watch-shaped time shift banner is combined with the bar-shaped time shift banner, this is merely exemplary, and it is also possible to display only the analog watch-shaped time shift banner when the time shift function is activated.

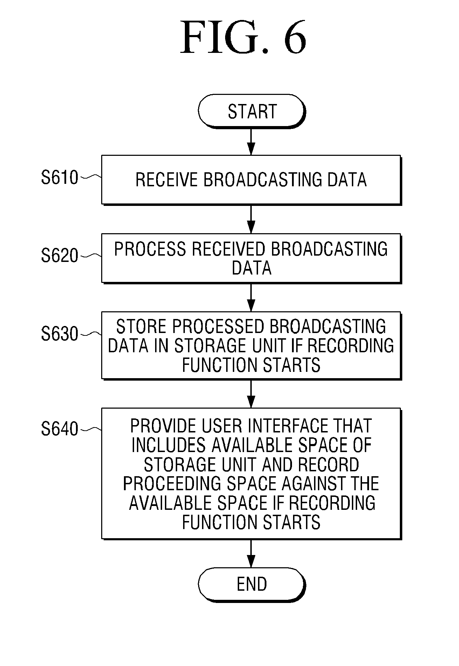

FIG. 6 is a flowchart illustrating a method of providing a Ul according to an exemplary embodiment.

Referring to FIG. 6, according to a Ul providing method of an image processing apparatus, if broadcasting data is received (S610), the received broadcasting data is processed (S620).

Then, if the recording function starts, the processed broadcasting data is stored in the storage unit (S630).

Also, if the recording function starts, a Ul is provided that includes information on an available space of the storage unit and a record proceeding space against the available space (S640). In this case, the space of the storage unit can be displayed in at least one of a time unit and a capacity unit.

Here, the storage unit may be implemented to include a circular buffer area that provides a time shift function.

Also, the step of providing the Ul (S640) may provide the Ul for the time shift function in an analog watch shape.

Also, the Ul for the time shift function may display at least one of time information on a time shiftable area, a storage level of the circular buffer area, and a current reproduction position.

Also, the Ul for the time shift function may display the time shiftable area in a fan-shaped diagram having two radiuses and one arc on the analog watch shape. In this case, one of the two radiuses represents time when the time shift function starts, and the other of the two radiuses represents time when the time shift function is possible based on the time when the time shift function starts.

Also, the Ul for the time shift function may display the storage level of the circular buffer area as a sub fan-shaped area that corresponds to the current storage level against the whole fan-shaped area. In this case, the corresponding sub fan-shaped area has a predetermined color so that the sub fan-shaped area is distinguished from a remaining storable area. Also, the Ul for the time shift function may display the current reproduction position on the circular buffer area in an hour hand or minute hand shape on the fan-shaped diagram.

Also, the step of providing the Ul may display the available space and the record proceeding space in a time unit, and may provide the Ul that displays at least one of broadcasting program information of which the recording is currently performed, a available time that remains in the storage unit, a recording completion time, a current record-setting time, and a remaining available time except for the current record-setting time.

In this case, the Ul can display time information in the form of a bar.

Also, the UI may display the bar so that the color of the bar is distinguished from the existing color in the case where the current record-setting time exceeds the available time, and display a minus (-) sign as long as the time that exceeds the available time.

Also, the Ul may display a recording completion time area so that the recording completion time area is distinguished from the current record proceeding time area if a new recording command is input during proceedings of a preset recording operation.

Also, the Ul may provide an inquiry window for resetting or maintaining the currently set recording operation in the case where the currently set recording time exceeds the available time.

Also, according to the present invention, a computer readable recording medium that includes a program that executes the Ul providing method of the display device as described above may be included. The computer readable recording medium includes all kinds of recording devices in which data that can be read by a computer system is stored. Examples of computer readable recording medium include a ROM, a RAM, a CD-ROM, a magnetic tape, a floppy disk, and optical data storage device. Also, the computer readable recording medium is distributed onto a computer system, and the computer readable code may be stored and executed in a distribution method.

As described above, according to the present invention, a user can accurately recognize the record end point in time.

Also, simultaneously with the recording start, the recording program and the recording end time can be easily designated in the same UI.

Also, by providing an available time to the currently connected storage device, it can help the user's selection of recording end time.

Also, the user can change the record program and the record end time in the same UI.

Also, an intuitive recognition of the recording state and the reproduction state can be provided to the user when the time shift function is used.

While the invention has been shown and described with reference to certain embodiments thereof, it will be understood by those skilled in the art that various changes in form and detail may be made therein without departing from the spirit and scope of the invention, as defined by the appended claims.

## Claims

1. An image processing apparatus comprising:
a reception unit which receives broadcasting data;
a signal processing unit which processes the received broadcasting data;
a storage unit which stores the processed broadcasting data when a recording function starts;
an output unit which provides a user interface; and
a control unit which controls the output unit to provide the user interface that comprises information on an available amount of space that is available in the storage unit for the recording function and a currently used amount of space which stores the broadcasting data as the recording function is recording from among the available amount of space.

2. The image processing apparatus as claimed in claim 1, wherein the storage unit comprises a buffer area that stores the processed broadcasting data to provide a time shift function, and the control unit controls the output unit to provide the user interface for the time shift function in an analog clock shape.

3. The image processing apparatus as claimed in claim 2, wherein the user interface for the time shift function displays at least one of time information on a time shiftable area, an available storage space of the buffer area, and a current reproduction position on the buffer area which is currently being reproduced from the broadcasting data stored in the buffer area.

4. The image processing apparatus as claimed in claim 3, wherein the user interface for the time shift function displays the time shiftable area as a first fan-shaped area having two radiuses and one arc on the analog clock shape, wherein one of the two radiuses represents a time when the time shift function starts, and another of the two radiuses represents a latest time when the time shift function will end based on the time when the time shift function starts.

5. The image processing apparatus as claimed in claim 4, wherein the user interface for the time shift function displays the available storage space of the buffer area as a second fan-shaped area within the time shiftable area,
wherein the second fan-shaped area has a predetermined color that is different than a color of a remaining portion of the time shiftable area.

6. The image processing apparatus as claimed in claim 3, wherein the user interface for the time shift function displays the current reproduction position on the buffer area in an hour hand or minute hand shape on the analog clock shape.

7. The image processing apparatus as claimed in anyone of claims 1 to 6, wherein the control unit controls the output unit to provide the user interface that displays the available amount of space and the currently used amount of space in a unit of time and displays at least one of a broadcasting program information of a broadcasting program which is currently being stored, the available amount of space in the unit of time that remains in the storage unit before the broadcasting program is stored, a recording completion time at which the broadcasting program which is currently being stored will be completely stored, a record set amount of space in the unit of time required to completely store the broadcasting program which is currently being stored, and a remaining available amount of space in the unit of time which remains available as the broadcasting program is stored.

8. The image processing apparatus as claimed in claim 7, wherein the user interface displays the available amount of space in the unit of time in a bar shape, displays the bar so that a color of the bar is changed when the record set amount of space exceeds the available amount of space, and displays a minus (-) sign and an shortage amount of space by which the record set amount of space exceeds the available amount of space.

9. The image processing apparatus as claimed in claim 7 or 8, wherein the user interface displays the available amount of space in a bar shape, and provides an inquiry window for resetting or maintaining the storing of the broadcasting program when the record set amount of time exceeds the available amount of time.

10. The image processing apparatus as claimed in anyone of claims 7 to 9, wherein, if a new recording command to store a new broadcast is input during a preset recording operation, the user interface displays the available amount of space in a bar shape, and displays a recording completion area on the bar shape indicating the amount of space which is required to store the new broadcast so that the recording completion area is visually distinguishable from the currently used amount of space.

11. The image processing apparatus as claimed in anyone of claims 1 to 10, wherein the user interface displays the available amount of space of the storage unit in at least one of a time unit and a capacity unit.

12. A method of providing a Ul (User Interface) of an image processing apparatus comprising:
receiving broadcasting data;
processing the received broadcasting data;
storing the processed broadcasting data in a storage unit when a recording function starts; and
providing the user interface that comprises information on an available amount of space that is available in the storage unit for the recording function and a currently used amount of space which stores the broadcasting data as the recording function is recording from among the available amount of space.

13. The method as claimed in claim 12, wherein the storage unit comprises a buffer area that stores the processed broadcasting data to provide a time shift function, and the providing the user interface provides the user interface for the time shift function in an analog clock shape.

14. The method as claimed in claim 13, wherein the user interface for the time shift function displays at least one of time information on a time shiftable area, an available storage space of the buffer area, and a current reproduction position on the buffer area which is currently being reproduced from the broadcasting data stored in the buffer area.

15. The method as claimed in claim 14, wherein the user interface for the time shift function displays the time shiftable area as a first fan-shaped area having two radiuses and one arc on the analog clock shape,
wherein one of the two radiuses represents a time when the time shift function starts, and another of the two radiuses represents a latest time when the time shift function will end based on the time when the time shift function starts.
